# EUROPÄISCHE PATENTSCHRIFT

(11) **EP 3 516 011 B1**
(45) Veröffentlichungstag und Bekanntmachung des Hinweises auf die Patenterteilung: **04.11.2020**
(21) Anmeldenummer: 17769097.1
(22) Anmeldetag: 20.09.2017
(51) Int. Cl.: C10B 53/02, C10B 21/18, C10B 21/00, C10B 25/22

(54) **VERFAHREN ZUR HERSTELLUNG VON BIOKOHLE UND ANLAGE HIERFÜR**
PROCESS FOR PRODUCING BIOCOAL AND PLANT THEREFOR
PROCÉDÉ DE FABRICATION DE CHARBON DE BIOMASSE ET INSTALLATION CORRESPONDANTE

(30) Priorität: 26.09.2016 AT 4382016
(43) Veröffentlichungstag der Anmeldung: 31.07.2019
(73) Patentinhaber: Schirnhofer, Leo, 2564 Weissenbach (AT)
(72) Erfinder: KNAUTZ, Holger, 2544 Leobersdorf (AT); SCHIRNHOFER, Leo, 2564 Weissenbach (AT)
(74) Vertreter: Beer & Partner Patentanwälte KG
(86) Internationale Anmeldenummer: PCT/EP2017/073824
(87) Internationale Veröffentlichungsnummer: WO 2018/055003

(56) Entgegenhaltungen:
- CH-A- 237 758
- DE-A1-102014 015 815
- US-A- 5 725 738

## Beschreibung

Die gegenständliche Erfindung betrifft ein Verfahren und eine Anlage zur Herstellung von Biokohle, bei welchem in Retorten befindliches biogenes Ausgangsmaterial pyrolysiert wird und die durch die Pyrolysen entstehenden brennbaren Pyrolysegase zur Erzeugung von heißen Rauchgasen verbrannt werden, wobei die Retorten zeitlich aufeinanderfolgend in Reaktorkammern eingebracht werden und mittels der Rauchgase die Pyrolysen durchgeführt werden.

Eine Pyrolyse ist ein thermischer Umwandlungsprozess, bei welchem aus organischen Ausgangsmaterialien unter Ausschluss von Sauerstoff Pyrolysegase und Biokohle entstehen. Die Temperaturen, bei denen die Ausgangsmaterialien pyrolysieren, liegen zwischen 250°C und 900°C. Die Dauer einer Pyrolyse liegt zwischen einigen Minuten und einigen Stunden.

Biokohle, welche aus forstwirtschaftlichen und landwirtschaftlichen Produkten, insbesondere aus Holz, hergestellt wird, dient als Grillkohle, als Bodenverbesserer, als Trägerstoff für Düngemittel, als Hilfsstoff für die Kompostierung, als Futtermittelzusatz, als Nahrungsergänzungsmittel, als Rohstoff in der pharmazeutischen Industrie und als Rohstoff für technische Zwecke, z.B. für die Filterung von Luft, Wasser u.dgl. Insbesondere für die Verwendung von Biokohle als industrieller Rohstoff sind bei der Produktion hohe Qualitäten und eine Zertifizierung der einzelnen Chargen erforderlich.

Durch moderne technische Verfahren können biogene Ausgangsmaterialien mit einem Wassergehalt von bis zu 50 Gew.-% der Frischsubstanz zu hochwertiger Biokohle pyrolysiert werden. Bei diesen Verfahren werden die bei den Pyrolysen entstehenden Pyrolysegase verbrannt. Ein Teil der dabei entstehenden Wärme wird zur Trocknung und Erwärmung der nachgeförderten biogenen Ausgangsmaterialien und zur Unterstützung der Pyrolyse verwendet. Der weitaus größere Teil der Wärme wird für Heizzwecke genutzt oder in Kraft-Wärme-Kopplungsanlagen zur kombinierten Erzeugung von Elektrizität und Wärme genutzt.

Es ist bekannt, Biokohle durch ein kontinuierlich verlaufendes Pyrolyseverfahren herzustellen, bei welchem die biogenen Ausgangsmaterialien in einem Schneckenreaktor kontinuierlich mit heißen Rauchgasen beaufschlagt werden. Bei einem solchen Verfahren erfolgt die Pyrolyse der Ausgangsmaterialien bei Temperaturen von 500°C bis 700°C und bei einer Verweilzeit im Bereich von 15 min bis 45 min. Die dabei entstehenden Pyrolysegase werden z.B. in einem Staubabscheider gereinigt und anschließend verbrannt. Die hierdurch erzeugten heißen Rauchgase dienen einerseits zur Beheizung des Reaktors und andererseits mittels Wärmetauscher zur Energiegewinnung.
Bei diesem Verfahren treten jedoch aufgrund des kontinuierlichen Materialdurchsatzes und der starken Materialbewegungen durch den Reaktor hindurch starke Staubemissionen auf, welche vor oder nach der Verbrennung der Pyrolysegase abgeschieden werden müssen. Weiters bestehen bei diesem Verfahren hohe Anforderungen an die Stückigkeit und an den Wassergehalt der Ausgangsmaterialien. Zudem ist durch die kontinuierliche Betriebsweise eine nur unzureichende Nachverfolgung der Produktionsbedingungen von einzelnen Chargen möglich.

Es ist weiters bekannt, biogene Ausgangsmaterialien in Chargen in Retorten einzubringen, welche jeweils einzeln mit heißen Rauchgasen beaufschlagt werden, um die Pyrolyse einzuleiten und zu unterstützen. Hierdurch erfolgt in den einzelnen Chargen eine Pyrolyse, deren Verlauf durch die heißen Rauchgase gesteuert werden kann, wodurch eine Steuerung der Qualität der einzelnen Chargen der erzeugten Biokohle erfolgen kann. Auch bei diesem Verfahren besteht jedoch der Nachteil einer Belastung der Rauchgase durch von diesen bei der Pyrolyse aufgenommene Schadstoffe in Form von gasförmigen und partikelförmigen Emissionen. Diesem bekannten Verfahren haftet weiters der Nachteil der Diskontinuität an, da die Zufuhr der Ausgangsmaterialien, die Zuleitung der heißen Rauchgase, die Ableitung der abgekühlten Rauchgase und die Abfuhr der erzeugten Biokohle diskontinuierlich erfolgen.

Weiterentwicklungen von Retortenverfahren nutzen die entstehenden Pyrolysegase für die Deckung des Energiebedarfs. Auch bei diesen Verfahren müssen die Ausgangsmaterialien definierte Rahmenbedingungen hinsichtlich der Stückigkeit und des Wassergehalts erfüllen, weswegen aufwändige Aufbereitungsschritte zur Materialzerkleinerung und zur Trocknung erforderlich sind. Außerdem müssen meistens die aus den Retorten austretenden Pyrolysegase vor ihrer Verbrennung abgekühlt werden, um Destillationsprodukte abzuscheiden, da erst dann die Pyrolysegase verbrannt und zur Beheizung des Reaktors eingesetzt werden können. Diese zusätzlichen Verfahrensschritte erhöhen die Komplexität der Anlagen und haben oftmals auch verunreinigte Abwässer zur Folge.

Aus der WO 2010/132970 A1 ist ein Pyrolyseverfahren bekannt, bei welchem jeweils einzelne Retorten in eine Pyrolysekammer eingebracht werden, wobei die in den Retorten befindlichen Ausgangsmaterialien aufeinanderfolgend einer Trocknung, einer Erwärmung und der Pyrolyse unterzogen werden, sowie weiters in der Pyrolysekammer die Abkühlung der erzeugten Kohle erfolgt, worauf die Retorten aus der Pyrolysekammer entnommen werden. Auch gemäß diesem Verfahren, bei welchem die Pyrolyse bei einer Temperatur von 320°C bis 350°C erfolgt, werden die Ausgangsmaterialien während der Trocknung sowie der Erwärmung und während der Pyrolyse unmittelbar mit heißen Rauchgasen aus der Pyrolysegasverbrennung beaufschlagt. Um einen kontinuierlichen Betrieb zu ermöglichen, sind mindestens drei voneinander unabhängige Reaktorkammern vorgesehen, wobei gleichzeitig in jeweils einer Reaktorkammer die Trocknung, die Pyrolyse und die Abkühlung erfolgen.
Die entstehenden Pyrolysegase werden in einem Brenner verbrannt und die entstehenden Rauchgase werden in direktem Kontakt mit den Ausgangsmaterialien für die Trocknung und für die Pyrolyse eingesetzt. Weiters erfolgt über eine Beimischung der aus der Trocknung austretenden Pyrolysegase eine Temperatureinstellung. Die nicht für die Trocknung erforderlichen Pyrolysegase werden über einen Kamin abgeleitet.

Auch dieses Verfahren ist deshalb nachteilig, da in die Rauchgase Bestandteile der Ausgangsmaterialien und der erzeugten Kohle gelangen, welche in weiterer Folge ausgefiltert werden müssen. Da weiters in den Reaktorkammern auch die Abkühlung der Kohle erfolgt, treten hierdurch große Wärmeverluste ein. Zudem ist deshalb, da die Abkühlung der Kohle durch eine Eindüsung von Wasser erfolgt, keine Wärmerückgewinnung möglich.

Die US 2013/011803 A1 offenbart ein Verfahren gemäß dem Oberbegriff des Anspruchs 1 und eine entsprechende Anlage gemäß dem Oberbegriff des Anspruchs 9 zur Herstellung von Biokohle, bei welchen in Retorten befindliches biogenes Ausgangsmaterial pyrolysiert wird und die durch die Pyrolysen entstehenden brennbaren Pyrolysegase zur Erzeugung von heißen Rauchgasen verbrannt werden, wobei die Retorten zeitlich aufeinanderfolgend in mindestens eine Reaktorkammer eingebracht werden und in diesen mittels der Rauchgase die Pyrolysen durchgeführt werden, wobei die Erhitzung der in den Retorten befindlichen Ausgangsmaterialien mittels der Rauchgase durch die Beheizung der Retorten nur mittelbar durch eine Trennwand hindurch erfolgt, und wobei die Pyrolysegase zu einer Brennkammer geleitet werden, in welcher die Rauchgase erzeugt werden, wobei die Retorten gegenüber dem Eintritt von heißen Rauchgasen zumindest weitgehend abgeschlossen sind, und wobei der die jeweilige Retorte umschließende Raum ein Ringraum zwischen der Trennwand und einer Außenwand der Retorte ist.

Der gegenständlichen Erfindung liegt die Aufgabe zugrunde, ein Verfahren bzw. eine Anlage zur Durchführung eines Pyrolyseverfahrens zu schaffen, durch welche die dem bekannten Stand der Technik zur Erzeugung von Biokohle anhaftenden Nachteile vermieden werden. Dies wird erfindungsgemäß durch ein Verfahren nach Anspruch 1 und eine Anlage nach Anspruch 9 erzielt.

Hierdurch wird gewährleistet, dass in die Rauchgase keine Bestandteile der in unterschiedlichen Stadien der Verkohlung befindlichen Ausgangsmaterialien gelangen, wodurch hierdurch erforderliche Reinigungen der abgekühlten Rauchgase vermieden werden und dass keine Oxydation der Ausgangsmaterialien stattfindet, die einen Produktionsverlust bedingen würde.

Im Vergleich zu den bekannten Pyrolyseverfahren erfolgt dabei eine direkte Verbindung der Reaktorkammern mit mindestens einem Pyrolysegasbrenner, wobei die entstehenden Pyrolysegase in unmittelbarer Folge verbrannt werden und die dabei entstehenden heißen Rauchgase kontinuierlich zur Beheizung der Reaktorkammern verwendet werden. Da sich in einer Anlage mehrere Retorten befinden, in welchen zeitlich versetzt die Pyrolysen erfolgen, wird ein kontinuierlicher Strom an Pyrolysegasen erzielt. Weiters erfolgt die Erhitzung der Retorten sowie der durch die Pyrolysen erzeugten Pyrolysegase indirekt ohne Kontakt der heißen Rauchgase mit dem Ausgangsmaterial zur Herstellung der Biokohle bzw. der Pyrolysegase.

Es strömen die in eine Reaktorkammer hineinströmenden heißen Rauchgase bzw. die aus dieser herausströmenden abgekühlten Rauchgase und die durch die Pyrolysen entstehenden und aus der Reaktorkammer herausströmenden Pyrolysegase in der Reaktorkammer durch eine in dieser befindlichen Trennwand in voneinander getrennten Bereichen. Dabei können die Retorten in mindestens einer Reaktorkammer angeordnet werden, können weiters die Pyrolysegase durch einen die jeweilige Retorte umschließenden Ringraum hindurch zu einer Brennkammer geleitet werden, in welcher die Rauchgase erzeugt werden, welche in die mindestens eine Reaktorkammer geleitet werden, in welcher durch die Rauchgase die abströmenden Pyrolysegase und die Außenwand der Retorte beheizt werden. Weiters können die Rauchgase teilweise in mindestens eine Reaktorkammer und teilweise zu mindestens einem Wärmetauscher geleitet werden.

Vorzugsweise werden die Strömungen der Rauchgase in den Zuleitungen der Rauchgase zu der mindestens einen Reaktorkammer und bzw. oder in den Ableitungen der abgekühlten Rauchgase aus der mindestens einen Reaktorkammer mittels Regeleinrichtungen gesteuert. Weiters werden vorzugsweise die aus der mindestens einen Reaktorkammer abströmenden abgekühlten Rauchgase teilweise den in der Brennkammer erzeugten und zu der mindestens einen Reaktorkammer strömenden Rauchgasen zugeführt, wodurch die in den Retorten erfolgenden Pyrolysen temperaturgesteuert werden.

Zudem können aus der mindestens einen Reaktorkammer abströmende abgekühlte Rauchgase mindestens einem Wärmetauscher zur Gewinnung der Restwärme zugeführt werden.

Insbesondere kann durch den mindestens einen Wärmetauscher gewonnene Restwärme zur Trocknung und bzw. oder zur Vorwärmung der biogenen Ausgangsmaterialien verwendet werden. Zudem kann auch die bei einer Abkühlung der Biokohle gewonnene Wärmeenergie einer Nutzung zugeführt werden.

Vorzugsweise werden die einzelnen Retorten zeitlich aufeinanderfolgend in die mindestens eine Reaktorkammer eingesetzt und werden die in den Retorten befindlichen biogenen Ausgangsmaterialien zeitlich aufeinanderfolgend pyrolysiert, wodurch kontinuierlich Pyrolysegase entstehen, mittels welcher Rauchgase erzeugt werden, durch welche die in den Retorten erfolgenden Pyrolysen unterstützt bzw. gesteuert werden. Dabei wird vorzugsweise eine erste Retorte, in welcher die Pyrolyse beendet wurde, aus einer Reaktorkammer entfernt und wird die in dieser Retorte befindliche Biokohle aus der Retorte entnommen, wird in mindestens einer zweiten Retorte, welche sich in einer Reaktorkammer befindet, das in dieser befindliche Ausgangsmaterial pyrolysiert und wird in eine Reaktorkammer mindestens eine dritte Retorte eingesetzt, in welcher die Pyrolyse des in dieser befindlichen biogenen Ausgangsmaterials eingeleitet wird.

Vorzugsweise ist bei einer Anlage zur Durchführung dieses Verfahrens mindestens eine Reaktorkammer vorgesehen, welche mit einem Reaktorraum zur Aufnahme mindestens einer Retorte, mit einer Einlassöffnung für Rauchgase in den Reaktorraum sowie mit einer Auslassöffnung für die abgekühlten Rauchgase, mit einer zwischen der Retorte und der Einlassöffnung bzw. der Auslassöffnung für die Rauchgase befindlichen Trennwand und weiters mit einer an den zwischen der Retorte und der Trennwand befindlichen Ringraum anschließenden Leitung, in welcher die aus der Retorte austretenden Pyrolysegase zur Brennkammer geführt werden, ausgebildet.
Dabei kann die mindestens eine Reaktorkammer mit einer zumindest nahezu gasdichten Abdeckung ausgebildet sein. Weiters kann die mindestens eine Reaktorkammer an ihrer Deckwand mit einer Öffnung ausgebildet sein, durch welche hindurch in die Reaktorkammer eine Retorte einsetzbar ist, und kann die Retorte mit einem seitlich abragenden Flansch ausgebildet sein, welcher an die Berandung der Öffnung anliegt. Dadurch kann der Reaktorraum der mindestens einen Reaktorkammer durch eine in diese eingesetzte Retorte zumindest nahezu gasdicht verschlossen sein.

Weiters kann in der von der Brennkammer zur mindestens einen Reaktorkammer führenden Leitung für die Rauchgase eine Mischeinrichtung vorgesehen sein, durch welche den von der Brennkammer zu der mindestens einen Reaktorkammer strömenden Rauchgasen abgekühlte Rauchgase zumischbar sind, wodurch die in den Retorten erfolgenden Pyrolysen steuerbar sind. Zudem können in den Leitungen, in welchen die Rauchgase von der Brennkammer zu der mindestens einen Reaktorkammer strömen und bzw. oder in den Leitungen, in welchen die abgekühlten Rauchgase von der mindestens einen Reaktorkammer abströmen, Einrichtungen zur Steuerung der in diesen Leitungen strömenden Rauchgase vorgesehen sein.

Vorzugsweise ist an die Leitung für die aus der Brennkammer abströmenden Rauchgase mindestens ein Wärmetauscher zur Nutzung der Wärmeenergie angeschlossen, sind an den mindestens einen Wärmetauscher Einrichtungen zur Trocknung bzw. zur Erwärmung der biogenen Ausgangsmaterialien angeschlossen. Weiters ist mindestens eine Einrichtung zur Abkühlung der erzeugten Biokohle vorgesehen, deren Abwärme einer Nutzung zugeführt werden kann.

Das erfindungsgemäße Verfahren und eine erfindungsgemäße Anlage sind nachstehend anhand von zwei in der Zeichnung dargestellten Ausführungsbeispielen näher erläutert. Es zeigen:
- FIG.1: eine erste Ausführungsform einer Anlage zur Durchführung des erfindungsgemäßen Verfahrens, in schematischer Darstellung,
- FIG.1A: eine Reaktorkammer mit einer Retorte, welche in einer Anlage gemäß FIG.1 verwendet wird, in gegenüber FIG.1 vergrößerter und detaillierter Darstellung, im Schnitt, und
- FIG.2: eine gegenüber der Ausführungsform gemäß FIG.1 ergänzte Ausführungsform einer Anlage zur Durchführung des erfindungsgemäßen Verfahrens, in schematischer Darstellung.

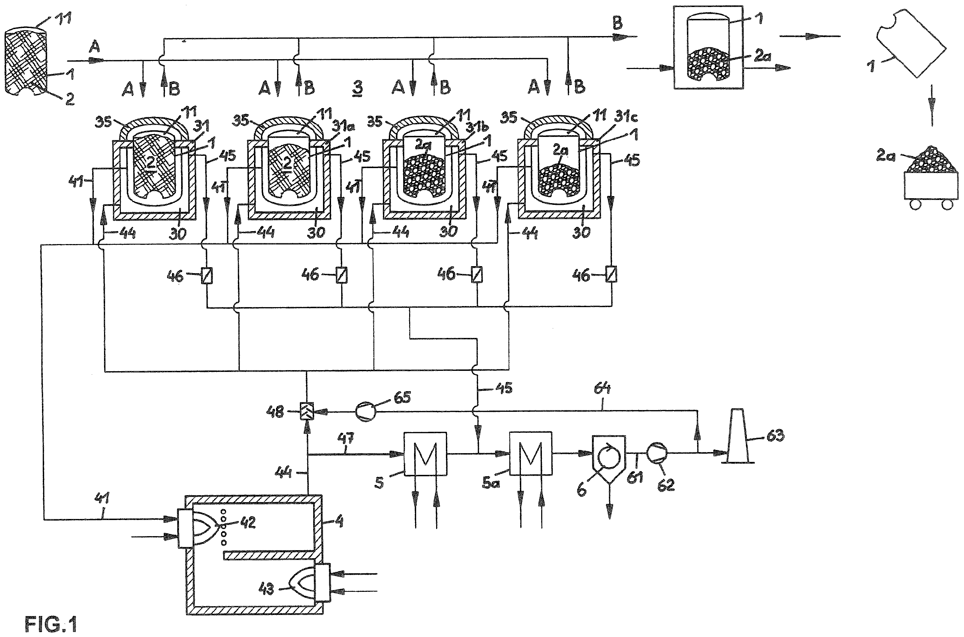

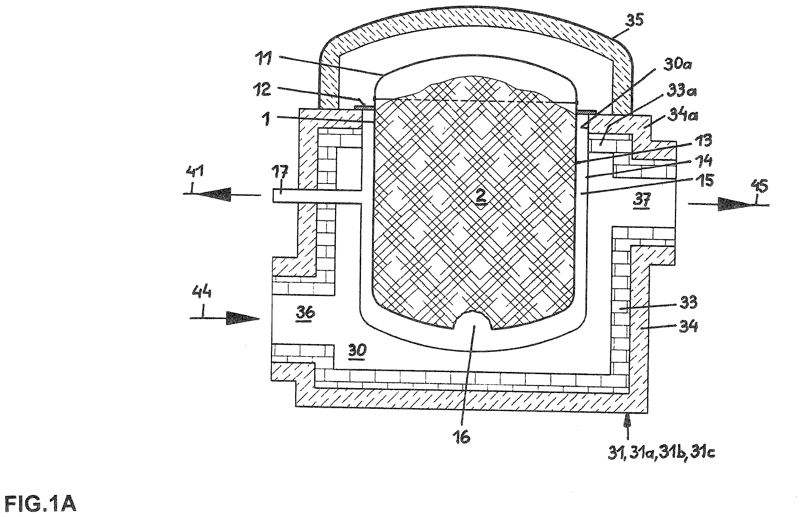

In FIG.1 ist eine Anlage dargestellt, in welcher mittels Retorten 1, in welchen sich ein biogenes Ausgangsmaterial 2 befindet, Biokohle 2a erzeugt wird. Die Retorten 1 sind mittels einer Abdeckung 11 zumindest nahezu gasdicht verschlossen. In dieser Anlage befindet sich eine erste Fördereinrichtung, mittels welcher die Retorten 1, wie dies durch Pfeile A angedeutet ist, in einen in der Anlage befindlichen Reaktor 3 eingesetzt werden. Im Reaktor 3 befinden sich vier Reaktorkammern 31, 31a, 31b, 31c, in welche jeweils zeitlich aufeinanderfolgend Retorten 1, welche biogenes Ausgangsmaterial 2 enthalten, eingesetzt werden. Weiters ist eine Brennkammer 4 vorgesehen, zu welcher von den Retorten 1 Leitungen 41 führen, durch welche hindurch die in den Retorten 1 entstehenden Pyrolysegase der Brennkammer 4 zugeführt werden. In der Brennkammer 4 werden die Pyrolysegase mittels eines in dieser befindlichen Hauptbrenners 42 unter Zufuhr von Luft verbrannt. Weiters befindet sich in der Brennkammer 4 ein Stützbrenner 43. Die Brennkammer 4 ist mittels Leitungen 44 mit den Reaktorkammern 31, 31a, 31b, 31c verbunden, über welche diesen in der Brennkammer 4 erzeugte heiße Rauchgase mit einer Temperatur von etwa 600°C bis 800°C zugeführt werden.
Durch die heißen Rauchgase wird in dem in den Retorten 1 befindlichen biogenen Ausgangsmaterial 2 eine Pyrolyse eingeleitet, wodurch Pyrolysegase entstehen, welche eine Temperatur von etwa 300°C bis 600°C aufweisen. Weiters sind an die Reaktorkammern 31, 31a, 31b, 31c Leitungen 45 angeschlossen, durch welche hindurch auf etwa 350°C bis 600°C abgekühlte Rauchgase abgeleitet werden.
Der in der Brennkammer 4 befindliche Stützbrenner 43 dient dazu, während des Anfahrens des Prozesses die für den Beginn der Pyrolyse in den Retorten 1 erforderlichen Rauchgase zu erzeugen. Die den Retorten 1 über die Leitungen 44 zugeführten heißen Rauchgase dienen dann zur Einleitung, zur Unterstützung und zur Steuerung der Pyrolyse.

In den Leitungen 45 bzw. 44 befinden sich Regeleinrichtungen 46 zur Steuerung des Volumens der von den Reaktorkammern 31, 31a, 31b, 31c wegströmenden bzw. den zu diesen hinströmenden Rauchgase. Weiters zweigt von der Leitung 44, durch welche hindurch von der Brennkammer 4 die Heizgase zu den Reaktorkammern 31, 31a, 31b, 31c strömen, eine Leitung 47 ab, die zu einem ersten Wärmetauscher 5 führt. Der Ausgang dieses Wärmetauschers 5 ist an einen zweiten Wärmetauscher 5a gelegt. An den zweiten Wärmetauscher 5a sind weiters die Leitungen 45 angeschlossen, über welche die in den Reaktorkammen 31, 31a, 31b, 31c abgekühlten Rauchgase abströmen.

Mittels der Wärmetauscher 5, 5a wird überschüssige Wärmeenergie abgeführt und verwertet. An den Wärmetauscher 5a ist eine Entstaubungsanlage 6 angeschlossen, deren Ausgang über eine Leitung 61, in welcher sich ein Ventilator 62 befindet, an einen Kamin 63 angeschlossen ist. An die Leitung 61 ist weiters eine Leitung 64 angeschlossen, in welcher sich ein Ventilator 65 befindet und welche an eine in der Leitung 44 befindliche Mischeinrichtung 48 angeschlossen ist. Durch die Zumischung von abgekühlten Rauchgasen zu den über die Leitungen 44 den Reaktorkammern 31, 31a, 31b, 31c zugeführten Rauchgasen erfolgt eine Steuerung der Wärmezufuhr zu den in den Reaktorkammern 31, 31a, 31b, 31c befindlichen Retorten 1, wodurch in Kombination mit den Regeleinrichtungen 46 der Verlauf der Pyrolysen gesteuert werden kann.

Mittels einer zweiten Fördereinrichtung werden, wie dies durch die Pfeile B angedeutet ist, diejenigen Retorten 1, bei welchen die Pyrolyse beendet ist und in welchen sich die erzeugte Biokohle 2a befindet, aus den Reaktorkammern 31, 31a, 31b, 31c entnommen und anschließend abgekühlt. Die Abkühlung kann dabei über natürliche oder erzwungene Konvektion mit Luft erfolgen. Die dabei auftretende Wärmeenergie kann der weiteren Nutzung zugeführt werden. Nach der Abkühlung werden die Retorten geöffnet und wird die Biokohle 2a abgeführt.

Nachstehend sind anhand der FIG.1A die Ausbildung einer Retorte 1, in welcher sich biogenes Ausgangsmaterial 2 befindet, und deren Anordnung in einer Reaktorkammer 31, 31a, 31b, 31c erläutert:
Die Reaktorkammern 31, 31a, 31b, 31c sind mit temperaturbeständigen Wänden 33 ausgebildet, welche mit einer äußeren Isolierung 34 versehen sind und durch welche ein Reaktorraum 30 umschlossen ist. An der Oberseite befindet sich eine Deckwand 33a, 34a, welche mit einer Öffnung 30a ausgebildet ist, durch welche hindurch in den Reaktorraum 30 eine Retorte 1 einsetzbar ist. Darüber befindet sich eine gasdicht aufgesetzte Haube 35, welche z.B. aus Stahlblech und einer Isolierung besteht. Die Retorte 1 ist an ihrer zylindrischen Außenwand 13 mit einem ringförmigen Flansch 12 ausgebildet, welcher an der Berandung der Deckwand 33a, 34a zur Anlage kommt, wodurch die Retorte 1 in den Reaktorkammern 31, 31a, 31b, 31c gehalten ist und weiters der Reaktorraum 30 zumindest nahezu gasdicht verschlossen ist. In den Reaktorkammern 31, 31a, 31b, 31c befindet sich eine zylindrische Trennwand 14, welche die zylindrische Außenwand 13 der Retorte 1 umschließt, wodurch zwischen den beiden Wänden 13 und 14 ein Ringraum 15 gebildet ist, welcher gegenüber dem Reaktorraum 30 zumindest nahezu gasdicht abgeschlossen ist. Im Bereich des Bodens ist die Retorte 1 mit einer Öffnung 16 ausgebildet, in welcher sich ein Rost befindet, durch welchen das Ausgangsmaterial 2 in der Retorte 1 gehalten wird. An den Ringraum 15 schließt ein Rohrstutzen 17 an, welcher die Wand 33, 34 der Reaktorkammern 31, 31a, 31b, 31c durchsetzt und an welchen die zur Brennkammer 4 führende Leitung 41 anschließt. Weiters ist die Reaktorkammer 31, 31a, 31b, 31c mit einer Einlassöffnung 36 für die Zuleitung von heißen Rauchgasen über die Leitung 44 von der Brennkammer 4 her und mit einer Auslassöffnung 37 für die Ableitung von abgekühlten Rauchgasen über die Leitung 45 ausgebildet.

Eine derartige Retorte 1 weist z.B. einen Fassungsraum von etwa 3 m³ auf, in welchen biogenes Ausgangsmaterial 2 mit einem Gewicht von etwa 1000 kg eingebracht werden kann. Die Retorte 1 selbst, welche aus Stahl hergestellt ist, weist ein Gewicht von etwa 650 kg auf. Die Menge der durch die Pyrolyse erzeugten Holzkohle 2a beträgt etwa 1,5 m³ mit einem Gewicht von etwa 350 kg. Aufgrund des großen Inhalts der Retorten kommt der Stückigkeit der Ausgangsmaterialien eine nur geringe Bedeutung zu.

Das Pyrolyseverfahren wird wie folgt durchgeführt:
Eine Retorte 1, in welcher sich biogenes Ausgangsmaterial 2 zur Herstellung von Biokohle 2a befindet, wird mittels der ersten Fördereinrichtung in Richtung der Pfeile A in eine der Reaktorkammern 31, 31a, 31b, 31c eingesetzt. Dabei wird der Reaktorraum 30 der Reaktorkammern 31, 31a, 31b, 31c durch die in diese eingesetzten Retorten 1 gegenüber dem Austritt von Gasen abgeschlossen. Hierauf werden der betreffenden Reaktorkammer 31, 31a, 31b, 31c von der Brennkammer 4 über die Leitung 44 heiße Rauchgase mit einer Temperatur von etwa 600°C bis 800°C zugeführt, welche durch die Einlassöffnung 36 in den Reaktorraum 30 einströmen. Hierdurch werden die Trennwand 14, das im Ringraum 15 befindliche Pyrolysegas und die Außenwand 13 der Retorte 1 erhitzt, wodurch das in der Retorte 1 befindliche biogene Material 2 pyrolysiert. Hierauf wird in eine weitere der Reaktorkammern 31, 31a, 31b, 31c eine weitere Retorte 1 eingesetzt, in welcher gleichfalls die Pyrolyse eingeleitet wird. Hierauf werden zeitlich aufeinanderfolgend in weitere der Reaktorkammern 31, 31a, 31b, 31c Retorten 1 eingesetzt. In sämtlichen diesen Retorten 1, in welchen sich biogenes Ausgangsmaterial 2 befindet, erfolgt eine Pyrolyse, wobei sich die in den einzelnen Retorten 1 stattfindenden Pyrolysen in jeweils unterschiedlichen Stadien befinden. Sobald die Pyrolyse in der ersten Retorte 1 beendet wurde, wird diese Retorte 1 aus der betreffenden Reaktorkammer entnommen und wird an deren Stelle eine weitere Retorte 1 eingesetzt, in welcher sich biogenes Ausgangsmaterial 2 befindet. Hierauf wird auch in dieser Retorte 1 eine Pyrolyse eingeleitet. In weiterer Folge werden jeweils diejenigen Retorten 1, bei denen die Pyrolyse beendet worden ist, aus den Reaktorkammern 31, 31a, 31b, 31c entnommen und werden weitere Retorten 1, in denen Biokohle 2a erzeugt werden soll, eingesetzt.

Die hierdurch entstehenden Pyrolysegase, welche Temperaturen von 300°C bis 600°C aufweisen, strömen durch die in der Bodenwand befindliche Öffnung 16 der Retorte 1 hindurch in den Ringraum 15 und gelangen in weiterer Folge durch den Rohrstutzen 17 hindurch in die Leitung 41, welche zur Brennkammer 4 führt, in welcher sie mittels des Hauptbrenners 42 verbrannt werden.

Die durch die Einlassöffnung 36 in den Reaktorraum 30 einströmenden Rauchgase werden im Reaktorraum 30 abgekühlt und strömen durch die Auslassöffnung 37 hindurch in die Leitung 45, durch welche sie zum zweiten Wärmetauscher 5a gelangen, in welchem die in diesen enthaltene Wärme gewonnen wird. Aus dem Wärmetauscher 5a austretende, weiter abgekühlte Rauchgase werden in der Entstaubungsanlage 6 gereinigt, und werden mittels des Ventilators 62 über den Kamin 8 an die freie Atmosphäre abgegeben bzw. über die Leitung 64 sowie die Mischeinrichtung 48 den von der Brennkammer 4 zu den Reaktorkammern 31, 31a, 31b, 31c strömenden Heizgasen zugeführt. Durch die mittels der Mischeinrichtung 48 den von der Brennkammer 4 zum Reaktor 3 strömenden Rauchgasen erfolgende Zumischung von abgekühlten Rauchgasen erfolgt ebenso wie durch die Regeleinrichtungen 46 eine Steuerung der in den Retorten 1 erfolgenden Pyrolysen.

Die beim Anfahren der Anlage für die Einleitung der Pyrolyse erforderlichen Rauchgase werden durch den Stützbrenner 17 erzeugt. Für die Pyrolysen wird nur ein geringer Anteil der durch die Brennkammer 4 erzeugten Rauchgase verwendet. Der überwiegende Anteil der durch die Brennkammer 4 erzeugten Rauchgase wird über die Leitung 47 an die Wärmetauscher 5 und 5a abgegeben, wobei die hierdurch erzeugte Wärmeenergie außerhalb der Anlage, u.a. für Heizungen und bzw. oder für die Erzeugung von Strom, verwendet wird.

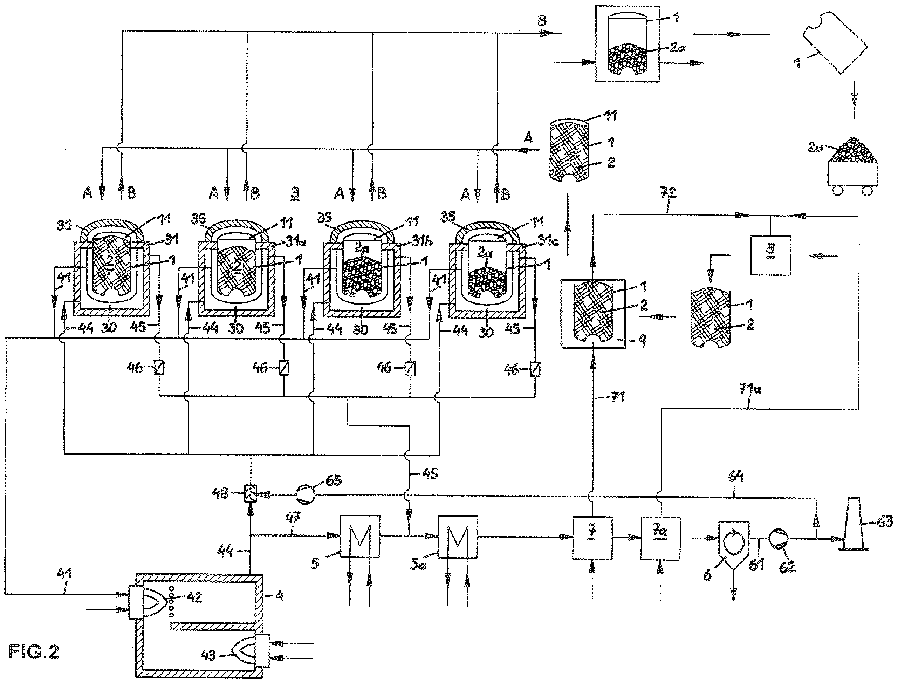

Die in FIG.2 dargestellte Anlage unterscheidet sich von der in FIG.1 dargestellten Anlage dadurch, dass an den Wärmetauscher 5a zwei Luftvorwärmer 7 und 7a angeschlossen sind. Vom Luftvorwärmer 7a geht eine Leitung 71a ab, welche zu einer Einrichtung 8 führt, in welcher das in einer Retorte 1 befindliche biogene Ausgangsmaterial 2 getrocknet wird. Vom Luftvorwärmer 7 geht eine Leitung 71 ab, welche zu einer Einrichtung 9 führt, in welcher das in einer Retorte 1 befindliche biogene Ausgangsmaterial 2 für die Pyrolyse vorgewärmt wird. Die von der Vorwärmeinrichtung 9 abgehende Warmluft wird über eine Leitung 72 der Trocknungseinrichtung 8 zugeführt. Aufgrund der Vortrocknung der Ausgangsmaterialien können diese Wassergehalte von bis zu 50 Gew.-% der Frischsubstanz aufweisen. Die das getrocknete und vorgewärmte biogene Ausgangsmaterial 2 enthaltenden Retorten 1 werden mittels der ersten Fördereinrichtung in Richtung der Pfeile A aufeinanderfolgend in den Reaktor 3 gefördert.

Maßgeblich für dieses Verfahren sind die folgenden Sachverhalte:
In den Reaktorkammern 31, 31a, 31b, 31c erfolgt nur die Pyrolyse der biogenen Ausgangsmaterialien 2. Demgegenüber erfolgen die Trocknung und die Erwärmung der Ausgangsmaterialien 2 und die Abkühlung der erzeugten Biokohle 2a außerhalb der Reaktorkammern 31, 31a, 31b, 31c. Die zur Einleitung und Steuerung der Pyrolyse erforderlichen Rauchgase werden nur einer außerhalb der Außenwand 13 der Retorte 1 befindlichen Trennwand 14 zugeführt. Dadurch werden die in dem zwischen der Trennwand 14 und der Außenwand 13 der Retorte 1 befindlichen Ringraum 15 strömenden Pyrolysegase und die Außenwand 13 der Retorte 1 erhitzt. Hierdurch wird vermieden, dass die Rauchgase mit Bestandteilen der in unterschiedlichen Stadien der Pyrolyse befindlichen Ausgangsmaterialien belastet werden, welche nachfolgend ausgeschieden werden müssten, und wird weiters eine unerwünschte Oxydation der Ausgangsmaterialien vermieden. Weiters werden hierdurch die Pyrolysegase auf eine höhere Temperatur erhitzt wodurch ein Auskondensieren von Teeren vermieden wird.
Dadurch, dass in den einzelnen Retorten die jeweils stattfindenden Pyrolysen gegeneinander zeitlich versetzt erfolgen, wird ein kontinuierlicher Strom an Pyrolysegasen sowie ein kontinuierlicher Strom an Rauchgasen bewirkt, wodurch der Betrieb der gesamten Anlage semi-kontinuierlich erfolgt.
Durch diesen Verfahrensablauf wird eine effiziente und sehr emissionsarme Produktion von Biokohle in einem hohen Ausmaß an Flexibilität des Einsatzmaterials und eine gute Nachverfolgbarkeit einzelner Produktchargen erzielt.

Die in den Retorten 1 befindlichen biogenen Ausgangsmaterialien 2 können deshalb, da sich die Retorten 1 in den einzelnen Reaktorkammern 31, 31a, 31b, 31c befinden, einzeln gesteuerten Pyrolysen unterzogen werden, wodurch spezifischen Anforderungen der erzeugten Biokohle 2a entsprochen werden kann und eine gute Nachverfolgbarkeit einzelner Chargen des Produktes erzielt wird. Durch den Einsatz mindestens eines Wärmetauschers bzw. die Rückführung der durch diesen abgegebenen weitgehend abgekühlten Pyrolysegase zum Heizgasstrom wird eine optimale Energieausbeute erreicht. Somit können bis zu 85% des Heizwertes des Ausgangsmaterials in nutzbare Energie in Form von Biokohle, Wärmeenergie bzw. elektrischen Strom umgewandelt werden.
Die Pyrolysen finden in den Retorten 1 chargenweise statt, wodurch ein Erwärmen, Pyrolysieren und Abkühlen der biogenen Ausgangsmaterialien bei minimaler Partikelabrasion und mit geringen staubförmigen Emissionen ermöglicht wird.

Durch ein erfindungsgemäßes Verfahren werden somit die folgenden Vorteile erreicht:
Geringe staubförmige Emissionen aufgrund der Minimierung von Materialbewegungen innerhalb der Retorten und aufgrund der indirekten Beheizung der Ausgangsmaterialien; kontinuierlicher Betrieb durch zeitliche Staffelung der in den einzelnen Retorten erfolgenden Pyrolysen, wodurch eine kontinuierliche Erzeugung von Pyrolysegasen und Rauchgasen erzielt wird;
gute Nachverfolgbarkeit der Pyrolysen von einzelnen Chargen, wodurch definierte Qualitäten der erzeugten Biokohle gewährleistet sind;
hohe Flexibilität beim Einsatz der Ausgangsmaterialien mit geringen Anforderungen an die Art, die Stückigkeit und den Wassergehalt der Ausgangsmaterialien;
geringe gasförmige Emissionen durch die direkte Verbrennung der Pyrolysegase;
geringe Kosten durch einen einfachen Verfahrensablauf und ein hoher Grad an möglicher Automatisierung;
Erzielen von hohen energetischen Wirkungsgraden durch weitgehende Ausnutzung der entstehenden Prozesswärme zur Wärme- und bzw. oder Stromproduktion.

### BEZUGSZAHLENLISTE

- A: Förderung mittels einer ersten Fördereinrichtung
- B: Förderung mittels einer zweiten Fördereinrichtung
- 1: Retorten
- 11: Abdeckung
- 12: Ringflansch
- 13: Außenwand der Retorten
- 14: Trennwand
- 15: Ringraum
- 16: Bodenöffnung
- 17: Rohrstutzen
- 2: biogenes Ausgangsmaterial
- 2a: Biokohle
- 3: Reaktor
- 30: Reaktorraum
- 30a: Öffnung
- 31,31a, 31b,31c: Reaktorkammern
- 33: Wand gemauert
- 33a: Deckwand
- 34: Isolierung
- 34a: Isolierung
- 35: Haube
- 36: Einlassöffnung für Heizgase
- 37: Auslassöffnung für Heizgase
- 4: Brennkammer
- 41: Leitungen für die Pyrolysegase
- 42: Hauptbrenner
- 43: Stützbrenner
- 44: Leitungen zu den Reaktorkammern
- 45: Leitungen für die abgekühlten Heizgase
- 46: Regeleinrichtungen
- 47: Leitungen zu Wärmetauschern
- 48: Mischeinrichtung
- 5, 5a: Wärmetauscher
- 6: Entstaubungsanlage
- 61: Leitung
- 62: Ventilator
- 63: Kamin
- 64: Leitung zur Mischeinrichtung
- 65: Ventilator
- 7: Luftvorwärmer für Vorwärmung
- 7a: Luftvorwärmer für Trocknung
- 71: Leitung zur Vorwärmeinrichtung
- 71a: Leitung zur Trockeneinrichtung
- 72: Abluftleitung
- 8: Trocknungseinrichtung
- 9: Vorwärmeinrichtung

## Patentansprüche

1. Verfahren zur Herstellung von Biokohle, bei dem in Retorten (1) befindliches biogenes Ausgangsmaterial (2) pyrolysiert wird und die durch die Pyrolysen entstehenden brennbaren Pyrolysegase zur Erzeugung von heißen Rauchgasen in einer Brennkammer (4) verbrannt werden, wobei die Retorten (1) zeitlich aufeinanderfolgend in mindestens eine Reaktorkammer (31, 31a, 31b, 31c) eingebracht werden und in diesen mittels der in die mindestens eine Reaktorkammer (31, 31a, 31b, 31c) geleiteten Rauchgase die Pyrolysen durchgeführt werden, wobei die Retorten (1) gegenüber dem Eintritt von heißen Rauchgasen zumindest weitgehend abgeschlossen sind und die Erhitzung der in den Retorten (1) befindlichen Ausgangsmaterialien (2) mittels der Rauchgase durch die Beheizung der Retorten (1) nur mittelbar durch eine Trennwand (14) hindurch erfolgt, und wobei ein die jeweilige Retorte (1) umschließender Raum ein Ringraum (15) zwischen der Trennwand (14) und einer Außenwand (13) der Retorte (1) ist, **dadurch gekennzeichnet, dass** die Pyrolysegase durch den Ringraum (15) hindurch zu der Brennkammer (4) geleitet werden, und dass durch die Rauchgase die abströmenden Pyrolysegase und die Außenwand (13) der Retorte (1) beheizt werden.

2. Verfahren nach Anspruch 1, **dadurch gekennzeichnet, dass** die in mindestens eine Reaktorkammer (31, 31a, 31b, 31c) hineinströmenden heißen Rauchgase bzw. die aus dieser herausströmenden abgekühlten Rauchgase und die durch die Pyrolysen entstehenden und aus der Reaktorkammer (31, 31a, 31b, 31c) herausströmenden Pyrolysegase in der Reaktorkammer (31, 31a, 31b, 31c) durch eine in dieser befindlichen Trennwand (14) in voneinander getrennten Bereichen strömen.

3. Verfahren nach Anspruch 1 oder 2, **dadurch gekennzeichnet, dass** die Rauchgase teilweise in mindestens eine Reaktorkammer (31, 31a, 31b, 31c) und teilweise zu mindestens einem Wärmetauscher (5, 5a) geleitet werden.

4. Verfahren nach einem der Ansprüche 1 bis 3, **dadurch gekennzeichnet, dass** in den Zuleitungen (44) der Rauchgase zu der mindestens einen Reaktorkammer (31, 31a, 31b, 31c) und bzw. oder in den Ableitungen (45) der abgekühlten Rauchgase aus der mindestens einen Reaktorkammer (31, 31a, 31b, 31c) mittels Regeleinrichtungen (46) die Strömungen der Rauchgase gesteuert werden.

5. Verfahren nach einem der Ansprüche 1 bis 4, **dadurch gekennzeichnet, dass** die aus der mindestens einen Reaktorkammer (31, 31a, 31b, 31c) abströmenden abgekühlten Rauchgase teilweise den in der Brennkammer (4) erzeugten und zu der mindestens einen Reaktorkammer (31, 31a, 31b, 31c) strömenden Rauchgasen zugeführt werden, wodurch die in den Retorten (1) erfolgenden Pyrolysen temperaturgesteuert werden.

6. Verfahren nach einem der Ansprüche 1 bis 5, **dadurch gekennzeichnet, dass** aus der mindestens einen Reaktorkammer (31, 31a, 31b, 31c) abströmende abgekühlte Rauchgase mindestens einem Wärmetauscher (5, 5a) zur Gewinnung der Restwärme zugeführt werden, und dass gegebenenfalls durch den mindestens einen Wärmetauscher (5, 5a) gewonnene Restwärme zur Trocknung und bzw. oder zur Vorwärmung der biogenen Ausgangsmaterialien (2) verwendet wird.

7. Verfahren nach einem der Ansprüche 1 bis 6, **dadurch gekennzeichnet, dass** die einzelnen Retorten (1) zeitlich aufeinanderfolgend in die mindestens eine Reaktorkammer (31, 31a, 31b, 31c) eingesetzt werden und die in den Retorten (1) befindlichen biogenen Ausgangsmaterialien (2) zeitlich aufeinanderfolgend pyrolysiert werden, wodurch kontinuierlich Pyrolysegase entstehen, mittels welcher Rauchgase erzeugt werden, durch welche die in den Retorten (1) erfolgenden Pyrolysen unterstützt bzw. gesteuert werden.

8. Verfahren nach Anspruch 7, **dadurch gekennzeichnet, dass** mindestens eine erste Retorte (1), in welcher die Pyrolyse beendet wurde, aus einer Reaktorkammer (31, 31a, 31b, 31c) entfernt wird und die in dieser Retorte (1) befindliche Biokohle (2a) aus der Retorte (1) entnommen wird, dass in mindestens einer zweiten Retorte (1), welche sich in einer Reaktorkammer (31, 31a, 31b, 31c) befindet, das in dieser befindliche Ausgangsmaterial (2) pyrolysiert wird und dass in eine Reaktorkammer (31, 31a, 31b, 31c) mindestens eine dritte Retorte (1) eingesetzt wird, in welcher die Pyrolyse des in dieser befindlichen biogenen Ausgangsmaterials (2) eingeleitet wird.

9. Anlage zur Durchführung des Verfahrens nach einem der Ansprüche 1 bis 8, in der mindestens eine Reaktorkammer (31, 31a, 31b, 31c) vorgesehen ist, welche mit einem Reaktorraum (30) zur Aufnahme mindestens einer Retorte (1) ausgebildet ist, wobei die Reaktorkammer (31, 31a, 31b, 31c) eine Einlassöffnung (36) für Rauchgase in den Reaktorraum (30) sowie eine Auslassöffnung (37) für die abgekühlten Rauchgase aufweist, wobei sich zwischen der Retorte (1) und der Einlassöffnung (36) bzw. der Auslassöffnung (37) für die Rauchgase eine Trennwand (14) befindet, und wobei sich zwischen einer Außenwand (13) der Retorte (1) und der Trennwand (14) ein Ringraum (15) befindet, **dadurch gekennzeichnet, dass** an den Ringraum (15) eine Leitung (17) anschließt, in welcher die aus der Retorte (1) in den Ringraum (15) austretenden Pyrolysegase zur Brennkammer (4) geführt werden.

10. Anlage nach Anspruch 9, **dadurch gekennzeichnet, dass** die mindestens eine Reaktorkammer (31, 31a, 31b, 31c) mit einer zumindest nahezu gasdichten Abdeckung (35) ausgebildet ist.

11. Anlage nach einem der Ansprüche 9 und 10, **dadurch gekennzeichnet, dass** die mindestens eine Reaktorkammer (31, 31a, 31b, 31c) an ihrer Deckwand (33a, 34a) mit einer Öffnung (30a) ausgebildet ist, durch welche hindurch in die Reaktorkammer (31, 31a, 31b, 31c) eine Retorte (1) einsetzbar ist, und dass die Retorte (1) mit einem seitlich abragenden Flansch (12) ausgebildet ist, welcher an die Berandung der Öffnung (30a) anliegt.

12. Anlage nach Anspruch 11, **dadurch gekennzeichnet, dass** der Reaktorraum (30) der mindestens einen Reaktorkammer (31, 31a, 31b, 31c) durch eine in diese eingesetzte Retorte (1) zumindest nahezu gasdicht verschlossen ist.

13. Anlage nach einem der Ansprüche 9 bis 12, **dadurch gekennzeichnet, dass** in der von der Brennkammer (4) zur mindestens einen Reaktorkammer (31, 31a, 31b, 31c) führenden Leitung (44) für die Rauchgase eine Mischeinrichtung (48) vorgesehen ist, durch welche den von der Brennkammer (4) zu der mindestens einen Reaktorkammer (31, 31a, 31b, 31c) strömenden Rauchgasen abgekühlte Rauchgase zumischbar sind, wodurch die in den Retorten (1) erfolgenden Pyrolysen steuerbar sind.

14. Anlage nach einem der Ansprüche 9 bis 13, **dadurch gekennzeichnet, dass** in den Leitungen (44), in welchen die Rauchgase von der Brennkammer (4) zu der mindestens einen Reaktorkammer (31, 31a, 31b, 31c) strömen und bzw. oder in den Leitungen (45), in welchen die abgekühlten Rauchgase von der mindestens einen Reaktorkammer (31, 31a, 31b, 31c) abströmen, Einrichtungen (46) zur Steuerung der in diesen Leitungen (44, 45) strömenden Rauchgase vorgesehen sind.

15. Anlage nach einem der Ansprüche 9 bis 14, **dadurch gekennzeichnet, dass** an die Leitung (44) für die aus der Brennkammer (4) abströmenden Rauchgase mindestens ein Wärmetauscher (5, 5a) zur Nutzung der Wärmeenergie angeschlossen ist, und dass gegebenenfalls an den mindestens einen Wärmetauscher (5, 5a) Einrichtungen (8, 9) zur Trocknung bzw. zur Erwärmung der biogenen Ausgangsmaterialien (2) angeschlossen sind.

## Claims

1. Process for the production of biochar, in which biogenic starting material (2) located in retorts (1) is pyrolyzed and the combustible pyrolysis gases produced by the pyrolyses are burned in a combustion chamber (4) to generate hot flue gases, wherein the retorts (1) are introduced one after another into at least one reactor chamber (31, 31a, 31b, 31c) and the pyrolyses are carried out therein by means of the flue gases conducted into the at least one reactor chamber (31, 31a, 31b, 31c), wherein the retorts (1) are at least largely sealed off from the entry of hot flue gases, and the heating of the starting materials (2) located in the retorts (1) by means of the flue gases by heating the retorts (1) is effected only indirectly through a partition wall (14), and wherein a space enclosing the respective retort (1) is an annular space (15) between the partition wall (14) and an outer wall (13) of the retort (1), **characterized in that** the pyrolysis gases are conducted through the annular space (15) to the combustion chamber (4), and **in that** the outflowing pyrolysis gases and the outer wall (13) of the retort (1) are heated by the flue gases.

2. Process according to claim 1, **characterized in that** the hot flue gases flowing into at least one reactor chamber (31, 31a, 31b, 31c) or the cooled flue gases flowing out of said chamber and the pyrolysis gases produced by the pyrolyses and flowing out of the reactor chamber (31, 31a, 31b, 31c) flow in the reactor chamber (31, 31a, 31b, 31c) in regions separated from one another by a partition wall (14) located in the reactor chamber (31, 31a, 31b, 31c).

3. Process according to claim 1 or 2, **characterized in that** the flue gases are conducted partly into at least one reactor chamber (31, 31a, 31b, 31c) and partly to at least one heat exchanger (5, 5a).

4. Process according to one of claims 1 to 3, **characterized in that** the flows of the flue gases are controlled in the feed lines (44) of the flue gases to the at least one reactor chamber (31, 31a, 31b, 31c) and/or in the discharge lines (45) of the cooled flue gases from the at least one reactor chamber (31, 31a, 31b, 31c) by means of regulating devices (46) .

5. Process according to one of claims 1 to 4, **characterized in that** the cooled flue gases flowing out of the at least one reactor chamber (31, 31a, 31b, 31c) are partially fed to the flue gases generated in the combustion chamber (4) and flowing to the at least one reactor chamber (31, 31a, 31b, 31c), whereby the pyrolyses occurring in the retorts (1) are temperature-controlled.

6. Process according to one of claims 1 to 5, **characterized in that** cooled flue gases flowing out of the at least one reactor chamber (31, 31a, 31b, 31c) are fed to at least one heat exchanger (5, 5a) for recovering the residual heat, and **in that**, optionally, residual heat recovered by the at least one heat exchanger (5, 5a) is used for drying and/or for preheating the biogenic starting materials (2).

7. Process according to one of claims 1 to 6, **characterized in that** the individual retorts (1) are inserted one after another into the at least one reactor chamber (31, 31a, 31b, 31c) and the biogenic starting materials (2) located in the retorts (1) are one after another pyrolyzed, whereby pyrolysis gases are continuously produced, by means of which flue gases are generated, by which the pyrolyses taking place in the retorts (1) are supported or controlled.

8. Process according to claim 7, **characterized in that** at least one first retort (1), in which the pyrolysis has been completed, is removed from a reactor chamber (31, 31a, 31b, 31c) and the biochar (2a) located in this retort (1) is removed from the retort (1), **in that** in at least one second retort (1), which is located in a reactor chamber (31, 31a, 31b, 31c), the starting material (2) located therein is pyrolyzed, and **in that** at least one third retort (1) is inserted into a reactor chamber (31, 31a, 31b, 31c), in which retort (1) the pyrolysis of the biogenic starting material (2) located therein is initiated.

9. Plant for carrying out the process according to one of claims 1 to 8, in which at least one reactor chamber (31, 31a, 31b, 31c) is provided, which is designed with a reactor space (30) for accommodating at least one retort (1), wherein the reactor chamber (31, 31a, 31b, 31c) has an inlet opening (36) for flue gases into the reactor space (30) and an outlet opening (37) for the cooled flue gases, wherein between the retort (1) and the inlet opening (36) or the outlet opening (37) for the flue gases, a partition wall (14) is located, and wherein an annular space (15) is located between an outer wall (13) of the retort (1) and the partition wall (14), **characterized in that** a line (17) is connected to the annular space (15) in which line (17) the pyrolysis gases emerging from the retort (1) into the annular space (15) are guided to the combustion chamber (4).

10. Plant according to claim 9, **characterized in that** the at least one reactor chamber (31, 31a, 31b, 31c) is formed with an at least nearly gas-tight cover (35).

11. Plant according to one of claims 9 and 10, **characterized in that** the at least one reactor chamber (31, 31a, 31b, 31c) is formed on its top wall (33a, 34a) with an opening (30a), through which a retort (1) can be inserted into the reactor chamber (31, 31a, 31b, 31c), and **in that** the retort (1) is formed with a laterally projecting flange (12) which rests against the edge of the opening (30a).

12. Plant according to claim 11, **characterized in that** the reactor space (30) of the at least one reactor chamber (31, 31a, 31b, 31c) is closed at least in an almost gas-tight manner by a retort (1) inserted therein.

13. Plant according to one of claims 9 to 12, **characterized in that** a mixing device (48) is provided in the line (44) for the flue gases leading from the combustion chamber (4) to the at least one reactor chamber (31, 31a, 31b, 31c), by means of which mixing device (48) cooled flue gases can be admixed to the flue gases flowing from the combustion chamber (4) to the at least one reactor chamber (31, 31a, 31b, 31c), whereby the pyrolyses taking place in the retorts (1) can be controlled.

14. Plant according to one of claims 9 to 13, **characterized in that** in the lines (44) in which the flue gases flow from the combustion chamber (4) to the at least one reactor chamber (31, 31a, 31b, 31c) and/or in the lines (45) in which the cooled flue gases flow out from the at least one reactor chamber (31, 31a, 31b, 31c), devices (46) are provided for controlling the flue gases flowing in these lines (44, 45).

15. Plant according to one of claims 9 to 14, **characterized in that** at least one heat exchanger (5, 5a) for utilizing the heat energy is connected to the line (44) for the flue gases flowing out of the combustion chamber (4), and **in that**, optionally, devices (8, 9) for drying or for heating the biogenic starting materials (2) are connected to the at least one heat exchanger (5, 5a).

## Revendications

1. Procédé pour la fabrication de biocharbon, dans lequel une matière première biogène (2) placée dans des cornues (1) est pyrolysée et les gaz de pyrolyse combustibles produits par la pyrolyse sont brûlés dans une chambre de combustion (4) pour produire des gaz de combustion chauds, les cornues (1) étant introduites l'une après l'autre dans au moins une chambre de réacteur (31, 31a, 31b, 31c) et les pyrolyses étant réalisées dans celle-ci au moyen des gaz de combustion amenés dans l'au moins une chambre de réacteur (31, 31a, 31b, 31c), dans lequel les cornues (1) sont fermées de façon au moins dans une grande mesure hermétique vis-à-vis de l'entrée de gaz de combustion chauds et les matières premières (2) qui se trouvent dans les cornues (1) sont chauffées au moyen des gaz de combustion par le chauffage des cornues (1) de façon seulement indirecte à travers une cloison de séparation (14), et dans lequel un espace entourant chaque cornue (1) est un espace annulaire (15) entre la cloison de séparation (14) et une paroi extérieure (13) de la cornue (1), **caractérisé en ce que** les gaz de pyrolyse sont acheminés à travers l'espace annulaire (15) vers la chambre de combustion (4) et **en ce que** les gaz de combustion chauffent les gaz de pyrolyse sortants et la paroi extérieure (13) de la cornue (1).

2. Procédé selon la revendication 1, **caractérisé en ce que** les gaz de combustion chauds entrant dans l'au moins une chambre de réacteur (31, 31a, 31b, 31c) ou les gaz de combustion refroidis sortant de celle-ci et les gaz de pyrolyse produits par les pyrolyses et sortant de la chambre de réacteur (31, 31a, 31b, 31c) passent dans la chambre de réacteur (31, 31a, 31b, 31c) dans des zones séparées les unes des autres par une cloison de séparation (14) qui se trouve dans celle-ci.

3. Procédé selon la revendication 1 ou 2, **caractérisé en ce que** les gaz de combustion sont acheminés en partie dans l'au moins une chambre de réacteur (31, 31a, 31b, 31c) et en partie vers au moins un échangeur de chaleur (5, 5a).

4. Procédé selon l'une des revendications 1 à 3, **caractérisé en ce que** les flux des gaz de combustion sont contrôlés au moyen d'installations de régulation (46) dans les conduites d'arrivée (44) des gaz de combustion vers l'au moins une chambre de réacteur (31, 31a, 31b, 31c) et/ou dans les conduites d'évacuation (45) des gaz de combustion refroidis sortant de l'au moins une chambre de réacteur (31, 31a, 31b, 31c).

5. Procédé selon l'une des revendications 1 à 4, **caractérisé en ce que** les gaz de combustion refroidis sortant de l'au moins une chambre de réacteur (31, 31a, 31b, 31c) sont en partie ajoutés aux gaz de combustion produits dans la chambre de combustion (4) et circulant vers l'au moins une chambre de réacteur (31, 31a, 31b, 31c), ce qui régule la température des pyrolyses qui se produisent dans les cornues (1).

6. Procédé selon l'une des revendications 1 à 5, **caractérisé en ce que** les gaz de combustion refroidis sortant de l'au moins une chambre de réacteur (31, 31a, 31b, 31c) sont amenés à au moins un échangeur de chaleur (5, 5a) pour la récupération de la chaleur résiduelle et **en ce que** la chaleur résiduelle récupérée par l'au moins un échangeur de chaleur (5, 5a) est éventuellement utilisée pour le séchage et/ou le préchauffage des matières premières biogènes (2).

7. Procédé selon l'une des revendications 1 à 6, **caractérisé en ce que** les différentes cornues (1) sont introduites l'une après l'autre dans l'au moins une chambre de réacteur (31, 31a, 31b, 31c) et les matières premières biogènes (2) qui se trouvent dans les cornues (1) sont pyrolysées l'une après l'autre, ce qui produit en continu des gaz de pyrolyse au moyen desquels sont produits des gaz de combustion qui entretiennent ou régulent les pyrolyses qui se produisent dans les cornues (1).

8. Procédé selon la revendication 7, **caractérisé en ce qu'**au moins une première cornue (1) dans laquelle la pyrolyse est terminée est retirée de la chambre de réacteur (31, 31a, 31b, 31c) et le biocharbon (2a) qui se trouve dans cette cornue (1) est retiré de la cornue (1) et en ce la matière première (2) se trouvant dans une deuxième cornue (1) qui se trouve dans une chambre de réacteur (31, 31a, 31b, 31c) est pyrolysée et **en ce qu'**au moins une troisième cornue (1) est introduite dans une chambre de réacteur (31, 31a, 31b, 31c) et la pyrolyse de la matière première biogène (2) qui s'y trouve est commencée.

9. Installation pour la mise en œuvre du procédé selon l'une des revendications 1 à 8, dans laquelle est prévue au moins une chambre de réacteur (31, 31a, 31b, 31c) qui est dotée d'un espace de réacteur (30) destiné à recevoir au moins une cornue (1), dans laquelle la chambre de réacteur (31, 31a, 31b, 31c) comporte une ouverture d'entrée (36) dans l'espace de réacteur (30) pour les gaz de combustion ainsi qu'une ouverture de sortie (37) pour les gaz de combustion refroidis, dans lequel une cloison de séparation (14) se trouve entre la cornue (1) et l'ouverture d'entrée (36) ou l'ouverture de sortie (37) pour les gaz de combustion et dans lequel un espace annulaire (15) se trouve entre une paroi extérieure (13) de la cornue (1) et la cloison de séparation (14), **caractérisé en ce qu'**une conduite (17) dans laquelle les gaz de pyrolyse sortant de la cornue (1) dans l'espace annulaire (15) sont amenés à la chambre de combustion (4) se raccorde à l'espace annulaire (15).

10. Installation selon la revendication 9, **caractérisée en ce que** l'au moins une chambre de réacteur (31, 31a, 31b, 31c) est munie d'une couverture (35) presque étanche aux gaz.

11. Installation selon l'une des revendications 9 et 10, **caractérisé en ce que** l'au moins une chambre de réacteur (31, 31a, 31b, 31c) est munie sur sa paroi de couverture (33a, 34a) d'une ouverture (30a) à travers laquelle une cornue (1) peut être introduite dans la chambre de réacteur (31, 31a, 31b, 31c) et **en ce que** la cornue (1) est munie d'une bride (12) qui dépasse latéralement et qui repose sur le bord de l'ouverture (30a).

12. Installation selon la revendication 11, **caractérisée en ce que** l'espace de réacteur (30) de l'au moins une chambre de réacteur (31, 31a, 31b, 31c) est fermée de façon au moins presque étanche aux gaz par une cornue (1) introduite dans celle-ci.

13. Installation selon l'une des revendications 9 à 12, **caractérisée en ce qu'**il est prévu dans la conduite (44) pour les gaz de combustion menant de la chambre de combustion (4) à l'au moins une chambre de réacteur (31, 31a, 31b, 31c) un dispositif mélangeur (48) par lequel des gaz de combustion refroidis par les gaz de combustion circulant de la chambre de combustion (4) à l'au moins une chambre de réacteur (31, 31a, 31b, 31c) peuvent être ajoutés, ce qui permet de réguler les pyrolyses qui se déroulent dans les cornues (1).

14. Installation selon l'une des revendications 9 à 13, **caractérisée en ce que** sont prévus, dans les conduites (44) dans lesquelles les gaz de combustion circulent de la chambre de combustion (4) à l'au moins une chambre de réacteur (31, 31a, 31b, 31c) et/ou dans les conduites (45) dans lesquelles les gaz de combustion refroidis sortent de l'au moins une chambre de réacteur (31, 31a, 31b, 31c), des dispositifs (46) pour la régulation des gaz de combustion circulant dans ces conduites (44, 45).

15. Installation selon l'une des revendications 9 à 14, **caractérisée en ce qu'**au moins un échangeur de chaleur (5, 5a) est raccordé à la conduite (44) pour les gaz de combustion sortant de la chambre de combustion (4) afin d'utiliser l'énergie thermique, et **en ce que** des dispositifs (8, 9) pour le séchage ou le chauffage des matières premières biogènes (2) sont éventuellement raccordés à l'au moins un échangeur de chaleur (5, 5a).
